# EUROPEAN PATENT APPLICATION

(11) **EP 0 700 973 A1**
(43) Date of publication of application: **13.03.1996**
(21) Application number: 95670003.3
(22) Date of filing: 13.04.1995
(51) Int. Cl.: C09B 62/78

(54) **Dyes for wool, polyamide fibres and leather, having as a reactive group a carboxylic anhydride group**

(30) Priority: 15.04.1994 PT 10149294
(71) Applicant: Gomes, Jaime Isidoro Naylor Rocha, P-4700 Braga (PT)
(72) Inventor: Moura, Joao Carlos Vidaurre Pais de, Gualtar, P-4700 Braga (PT); Oliviera - Campos, Ana Maria Ferreira de, Gualtar, P-4700 Braga (PT); Maia, Hernâni Lopes da Silva, Gualtar, P-4700 Braga (PT); Hrdina, Radim - Idite Minho, P-4800 Guimaraes (PT)

(57) **Abstract**

The invention we claim refers to dyes mainly for wool and polyamide fibres and polyester wool blends, their application being also possible on other proteic materials, such as silk and leather. These dyes contain a reactive group of the mixed anhydride type (*c*.*f*. figure), which reacts covalently with proteic and polyamide fibres, thus ensuring a high wash fastness to alkaline conditions.
In their insoluble form, the dyes which are devoid of sulphonic groups are absorbed by wool only above 70°C, showing high migration at this temperature, thus giving more uniform dyeings than when other reactive dyes are used.
In their soluble form, dyes containing sulphonic groups show a good performance, namely high wash fastness on polyamide dyeings.
These dyes were also applied in their insoluble form, to polyester-wool blends, and uniform colours were obtained.
The dyes were very successful when tested on leather, either in their soluble or insoluble form (by application of a solution of the dye with a spray gun).

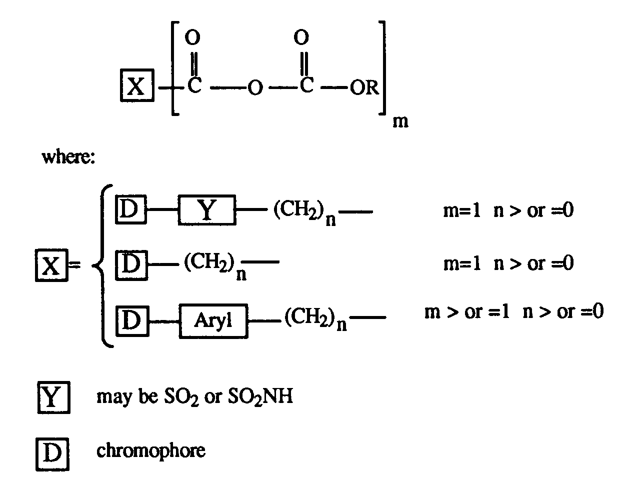

## Description

The present invention refers to a group of dyes that will react with wool and polyamide, forming a covalent bond with these fibres. The first reactive dyes for wool were of the vinylsulphonic type, and appeared on 1952, although a patent, where a covalent link between a dye and a fibre was referred, was only registered on 1956. Their reactive group was chlorotriazine and so they were not useful for wool. Other reactive dyes containing heterocycles as reactive groups were later introduced, namely the ones with difluorochloropyrimidine in the 70's, but they were not a great success, mainly because they needed alkaline conditions for their fixation, which will affect the quality and resistance of the wool. In 1966 bromoacrylamide dyes which will react at a slightly acid pH were introduced, thus being more successful than other types of reactive dyes. However they need a buffer or addition of base during the process, to neutralise the HBr that liberates and a treatment with ammonia, in the end, to finalise the fixation of the dye and extract the hydrolysed dye which did not fix. Both the HBr formed and the ammonia may affect the properties of the wool fibre, namely the handle.

Another problem of the existing reactive dyes is the uneven dyeing which is sometimes obtained, due to the great affinity of the dye towards the fibre. This problem may be diminished by the use of auxilliary products during the dyeing process, which delay the absorption of the dye in the initial phase of the dyeing. These products are, in general, quaternary ammonium salts, which are known pollutants.
If the dye has a lower affinity in the beginning of the process it will only need a small amount of this auxilliary product, thus avoiding this problem. Insoluble dyes are included here.
The dye whose invention we claim is particularly useful for application to wool and wool and polyester blends. The dye forms covalent bonds with wool, the result being wash fastness and a good fastness of the colours, superior to the properties presented by other classes of existing dyes that do not contain reactive groups.

In its insoluble form the dye is particularly stable and easy to apply either on wool or in wool-polyester blends. The application of these dyes consists in dispersing them in an aqueous solution of pH 5 to 7, at room temperature and then raising the temperature, for fixation, to values from 70 to 120°C. If the dyeing is for wool only, the temperature should be kept below 100°C, to avoid degradation of the fibre, and in the case of a mixture with polyester the temperature should reach 120°C and products that may protect wool should be added, such as products based on formaldehyde and auxilliary products for polyester, known as carriers.

These dyes may also be applied by impregnation in a pad-mangle and later fixed, in a stenter or oven at a temperature of 120 to 150°C for polyester wool mixtures.
Better results are achieved for polyamide, with the same type of dyes but containing sulphonic groups in their structure, which makes them water soluble. In this case the dye is applied from an aqueous solution at pH values of 5 to 7 and at a temperature 70 to 120°C. There is a covalent bond formed between the dye and the fibre and this is confirmed by the high wash fastness shown on polyamide and the general good colour fastness.

These dyes are specially useful for wool because they dye and fix from an acid or neutral bath not damaging the wool fibres. Other existing reactive dyes that are applied from an acid medium need an aftertreatment with ammonia to fix the remaining dye. These dyes, because they dye in acid or neutral medium, do not damage the wool fibre and so they are particularly useful. Other existing reactive dyes, being applied at acid pH, need an aftertreatment with ammonia to fix the remaining dye. These dyes do not need an alkaline aftertreatment, and this is an advantage since that treatment may deteriorate the fibres.

Although the fixation is high, it is advisable to use, as it is the case with most reactive dyes, a 15 minutes treatment to boil, with an anionic detergent (0.5 to 2 g/l), to remove the unfixed dye.

It is possible with these dyes to obtain bright colours either on wool or polyamide, which of course is an advantage specially for polyamide. Other reactive dyes may also give bright colours but they have a drawback of producing uneven dyeings. The dyes under claim here give even dyeings on both wool and polyamide, namely when they are applied with the assistance of ethoxylated amphoteric products in the dyeing bath that, being able to complex with the dye, avoid its rapid and uneven absorption. In the case of wool, the reason for this behaviour may be due to the fact that the dyes are only absorbed at a temperature above 70°C, and in the case of polyamide it is related to the small molecules of the dyes that allow for a good diffusion capacity.

The claimed dye may also be applied from solution on a solvent miscible with water, such as dimethylformamide. This solution is added to the dyeing bath at a temperature of 70 to 100°C. This method ensures a good yield on dyeing because it avoids the aggregation of the dye. As an alternative, or a complement in all the dyeings with the insoluble dye, it is advisable to add a dispersing agent (1 to 2 g/l).

These dyes can be applied to leather with good results, resulting a good penetration, for both methods - normal dyeing or application in a solvent - due to the small size of the dye molecule.

### Examples

### Example 1

A solution of the dye (a) (0.48g; 1.25 mmol) in dimethylformamide (DMF, 60 ml) was cooled to -5° C (methanol/ice bath). To this solution were added in this order triethylamine (0.52 ml; 3.74 mmol) and ethyl chloroformate (0.36 ml; 3.76 mmol) and the mixture was kept stirring for 20 minutes. The solid triethylamine hydrochloride was filtered off and crushed ice was added to the filtrate. After stirring the dye (b) separated out as an orange solid which was filtered and dried at a temperature lower than 30°C.

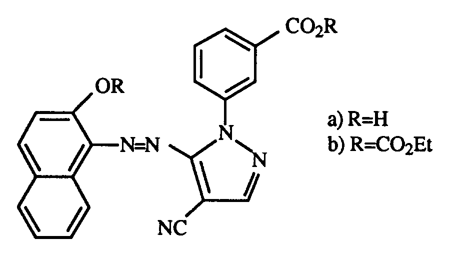

### Example 2

A solution of the dye (a) (0.60g; 1.70 mmol) in DMF (100 ml) was cooled to -5° C (methanol/ice bath). To this solution were added in this order triethylamine (0.25 ml; 1.80 mmol) and ethyl chloroformate (0.16 ml; 1.70mmol) and the mixture was kept stirring for 15 minutes. The solid triethylamine hydrochloride was filtered off and crushed ice was added to the filtrate. After stirring the dye (b) separated out as an orange solid which was filtered and dried at a temperature lower than 30°C.

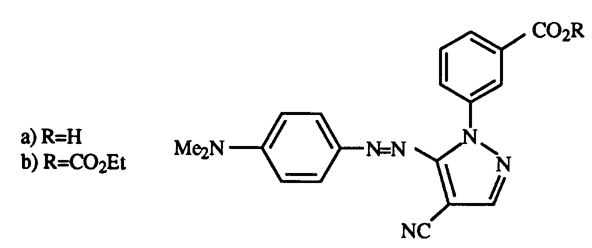

### Example 3

A solution of the dye (a) (0.50g; 1.36 mmol) in DMF (40 ml) was cooled to -5° C (methanol/ice bath). To this solution were added in this order triethylamine (1.13ml; 8.10mmol) and ethyl chloroformate (0.36 ml; 3.76 mmol) and the mixture was kept stirring for 20 minutes. The solid triethylamine hydrochloride was filtered off and ice was added to the filtrate. After stirring the dye (b) separated out as a yellow solid which was filtered and dried at a temperature lower than 30°C.

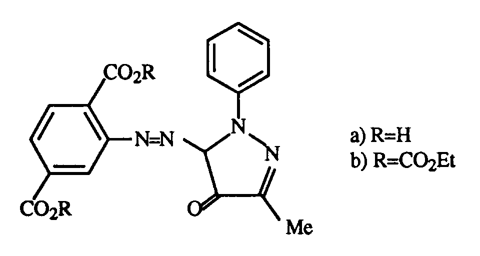

### Example 4

A solution of the dye (a) (0.50g; 1.49 mmol) in DMF (40 ml) was cooled to -5° C (methanol/ice bath). To this solution were added in this order triethylamine (1.36 ml; 9.78mmol) and ethyl chloroformate (0.95 ml; 9.9 mmol) and the mixture was kept stirring for 30 minutes. The solid triethylamine hydrochloride was filtered off and ice was added to the filtrate. After stirring the dye (b) separated out as an orange solid which was filtered and dried at a temperature lower than 30°C.

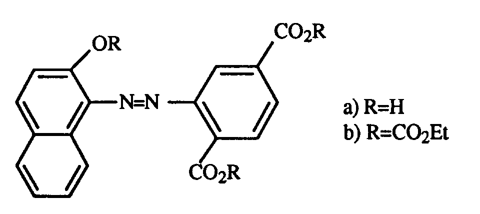

### Example 5

A solution of the dye (a) (0.50g; 1.60 mmol) in DMF (40 ml) was cooled to -5° C (methanol/ice bath). To this solution were added in this order triethylamine (1.46ml; 10mmol) and ethyl chloroformate (1.01 ml; 10,6mmol) and the mixture was kept stirring for 60 minutes. The solid triethylamine hydrochloride was filtered off and ice was added to the filtrate. After stirring the dye (b) separated out as a yellow solid which was filtered and dried at a temperature lower than 30°C.

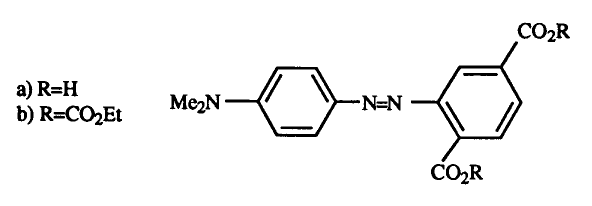

### Example 6

A solution of the dye (a) (0.50 g; 1.7 mmol) in acetone (350 ml) was cooled to -5° C (methanol/ice bath). To this solution were added in this order triethylamine (0.65 ml; 4.7mmol) and ethyl chloroformate (0.45 ml; 4.7 mmol) and the mixture was kept stirring for 30 minutes. The solid triethylamine hydrochloride was filtered off and ice was added to the filtrate. After stirring the dye (b) separated out as an orange solid which was filtered and dried at a temperature lower than 30°C.

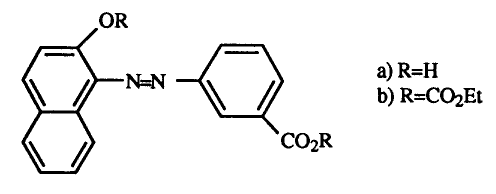

### Example 7

A solution of the dye (a) (0.50 g; 1.70 mmol) in DMF (75 ml) was cooled to -5° C (methanol/ice bath). To this solution were added in this order triethylamine (0.65 ml; 4.7 mmol) and ethyl chloroformate (0.45 ml; 4.7 mmol) and the mixture was kept stirring for 30 minutes. The solid triethylamine hydrochloride was filtered off and ice was added to the filtrate. After stirring the dye (b) separated out as an orange solid which was filtered and dried at a temperature lower than 30°C.

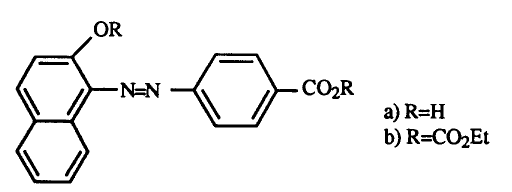

### Example 8

A solution of the dye (a) (0.50 g; 1.4 mmol) in DMF (65 ml) was cooled to -5° C (methanol/ice bath). To this solution were added in this order triethylamine (0.54 ml; 3.9 mmol) and ethyl chloroformate (0.37 ml; 3.9 mmol) and the mixture was kept stirring for 30 minutes. The solid triethylamine hydrochloride was filtered off and ice was added to the filtrate. After stirring the dye (b) separated out as a blue solid which was filtered and dried at a temperature lower than 30°C.

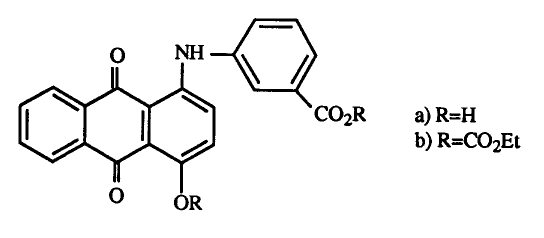

### Example 9

A solution of the dye (a) (2.0 g; 6.7 mmol) in DMF (25 ml) was cooled to -5° C (methanol/ice bath). To this solution were added in this order triethylamine (1.30 ml; 6.9 mmol) and ethyl chloroformate (0.7 ml; 7.4 mmol) and the mixture was kept stirring for 15 minutes. The solid triethylamine hydrochloride was filtered off and ice was added to the filtrate. After stirring the dye (b) separated out as a yellow solid which was filtered and dried at a temperature lower than 30°C.

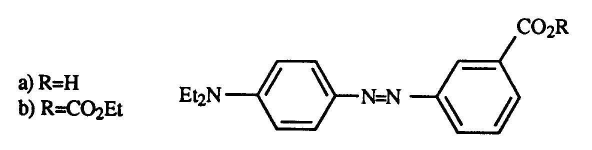

### Example 10

A solution of the dye (a) (2.0 g; 6.7 mmol) in DMF (25 ml) was cooled to -5° C (methanol/ice bath). To this solution were added in this order triethylamine (1.3 ml; 6.9mmol) and ethyl chloroformate (0.7 ml; 7.4 mmol) and the mixture was kept stirring for 15 minutes. The solid triethylamine hydrochloride was filtered off and ice was added to the filtrate. After stirring the dye (b) separated out as a yellow solid which was filtered and dried at a temperature lower than 30°C.

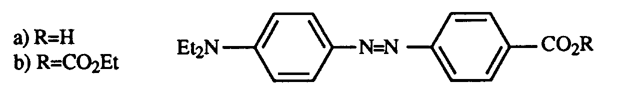

### Example 11

A solution of the dye (a) (2.0 g; 6.9 mmol) in DMF (25 ml) was cooled to -5° C (methanol/ice bath). To this solution were added in this order triethylamine (1.4 ml; 7.5 mmol) and ethyl chloroformate (0.7 ml; 7.4 mmol) and the mixture was kept stirring for 15 minutes. The solid triethylamine hydrochloride was filtered off and ice was added to the filtrate. After stirring the dye (b) separated out as an orange solid which was filtered and dried at a temperature lower than 30°C.

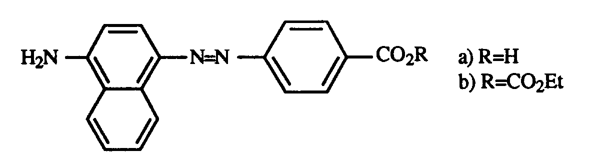

### Example 12

A solution of the dye (a) (2.0 g; 6.2 mmol) in DMF (25 ml) was cooled to -5° C (methanol/ice bath). To this solution were added in this order triethylamine (1.3 ml; 6.9 mmol) and ethyl chloroformate (0.7 ml; 7.4 mmol) and the mixture was kept stirring for 15 minutes. The solid triethylamine hydrochloride was filtered off and ice was added to the filtrate. After stirring the dye (b) separated out as a yellow solid which was filtered and dried at a temperature lower than 30°C.

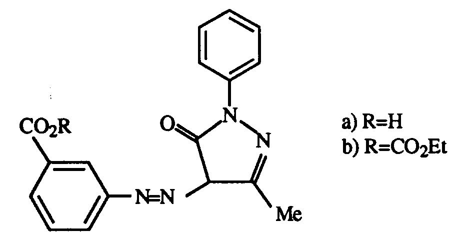

### Example 13

A solution of the dye (a) (2.0 g; 6.8 mmol) in DMF (25 ml) was cooled to -5° C (methanol/ice bath). To this solution were added in this order triethylamine (2.6 ml; 13.9 mmol) and ethyl chloroformate (1.4 ml; 14.7 mmol) and the mixture was kept stirring for 15 minutes. The solid triethylamine hydrochloride was filtered off and ice was added to the filtrate. After stirring the dye (b) separated out as an orange solid which was filtered and dried at a temperature lower than 30°C.

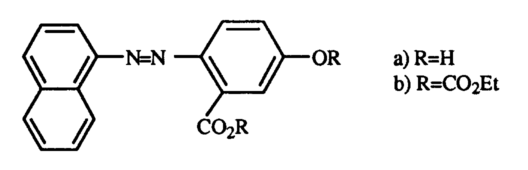

### Example 14

A solution of the dye (a) (2.0 g; 7.0 mmol) in DMF (25 ml) was cooled to -5° C (methanol/ice bath). To this solution were added in this order triethylamine (2.8 ml; 14.9 mmol) and ethyl chloroformate (1.4 ml; 14.7 mmol) and the mixture was kept stirring for 15 minutes. The solid triethylamine hydrochloride was filtered off and ice was added to the filtrate. After stirring the dye (b) separated out as an orange solid which was filtered and dried at a temperature lower than 30°C.

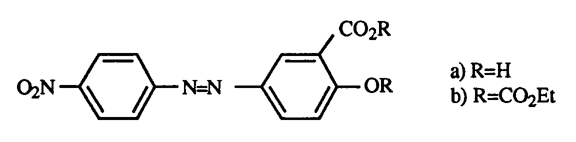

### Example 15

A solution of the dye (a) (2.0 g; 7.1 mmol) in DMF (25 ml) was cooled to -5° C (methanol/ice bath). To this solution were added in this order triethylamine (1.4 ml; 7.5 mmol) and ethyl chloroformate (0.7 ml; 7.4 mmol) and the mixture was kept stirring for 15 minutes. The solid triethylamine hydrochloride was filtered off and ice was added to the filtrate. After stirring the dye (b) separated out as an orange solid which was filtered and dried at a temperature lower than 30°C.

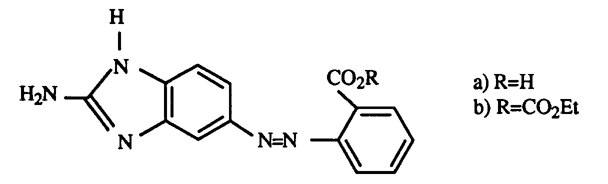

### Example 16

A solution of the dye (a) (2.0 g; 7.0 mmol) in DMF (25 ml) was cooled to -5° C (methanol/ice bath). To this solution were added in this order triethylamine (2.8 ml; 14.9 mmol) and ethyl chloroformate (1.4 ml; 14.7 mmol) and the mixture was kept stirring for 15 minutes. The solid triethylamine hydrochloride was filtered off and ice was added to the filtrate. After stirring the dye (b) separated out as an orange solid which was filtered and dried at a temperature lower than 30°C.

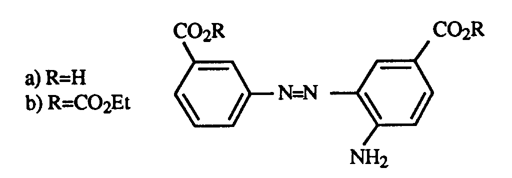

### Example 17

A solution of the dye (a) (2.0g; 6.7 mmol) in DMF (25 ml) was cooled to -5° C (methanol/ice bath). To this solution were added in this order triethylamine (1.3 ml; 6.9 mmol) and benzyl chloroformate (1.2 g; 7.0 mmol) and the mixture was kept stirring for 15 minutes. The solid triethylamine hydrochloride was filtered off and ice was added to the filtrate. After stirring the dye (b) separated out as a yellow solid which was filtered and dried at a temperature lower than 30°C.

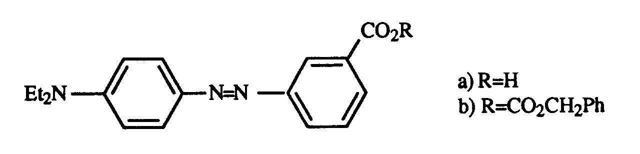

### Example 18

A solution of the dye (a) (2.0g; 3.3 mmol) in DMF (25 ml) was cooled to -5° C (methanol/ice bath). To this solution were added in this order triethylamine (3.2 ml; 17.1 mmol) and ethyl chloroformate (1.0 ml; 10.5 mmol) and the mixture was kept stirring for 15 minutes. The solid triethylamine hydrochloride was filtered off and ice was added to the filtrate. After stirring the dye (b) separated out as a blue solid which was filtered and dried at a temperature lower than 30°C.

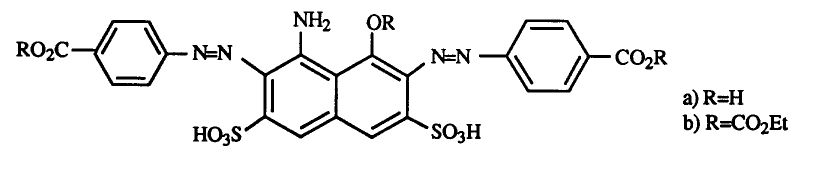

### Example 19

A solution of the dye (a) (2.0 g; 3.4 mmol) in DMF (25 ml) was cooled to -5° C (methanol/ice bath). To this solution were added in this order triethylamine (2.8 ml; 14.9 mmol) and ethyl chloroformate (1.4 ml; 14.7 mmol) and the mixture was kept stirring for 15 minutes. The solid triethylamine hydrochloride was filtered off and ice was added to the filtrate. After stirring the dye (b) separated out as a red solid which was filtered and dried at a temperature lower than 30°C.

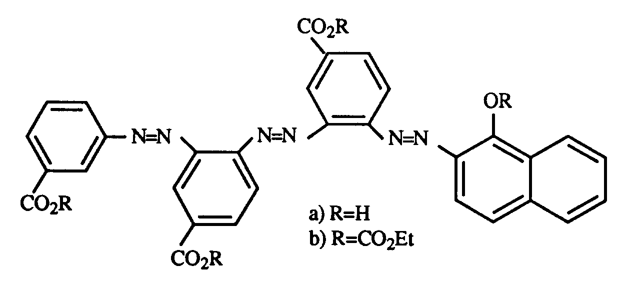

### Example 20

A solution of the dye (a) (2.0 g; 3.2 mmol) in DMF (25 ml) was cooled to -5° C (methanol/ice bath). To this solution were added in this order triethylamine (1.9 ml; 10.1 mmol) and ethyl chloroformate (1.0 ml; 10.5 mmol) and the mixture was kept stirring for 15 minutes. The solid triethylamine hydrochloride was filtered off and ice was added to the filtrate. After stirring the dye (b) separated out as an orange solid which was filtered and dried at a temperature lower than 30°C.

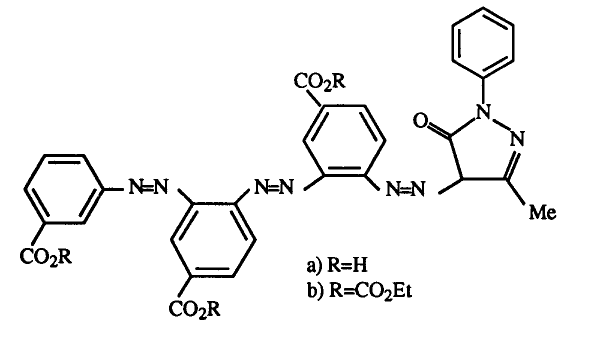

### Example 21

A solution of the dye (a) (2.0 g; 3.3 mmol) in DMF (25 ml) was cooled to -5° C (methanol/ice bath). To this solution were added in this order triethylamine (2.5 ml; 13.3 mmol) and ethyl chloroformate (0.7 ml; 7.4 mmol) and the mixture was kept stirring for 15 minutes. The solid triethylamine hydrochloride was filtered off and ice was added to the filtrate. After stirring the dye (b) separated out as a violet solid which was filtered and dried at a temperature lower than 30°C.

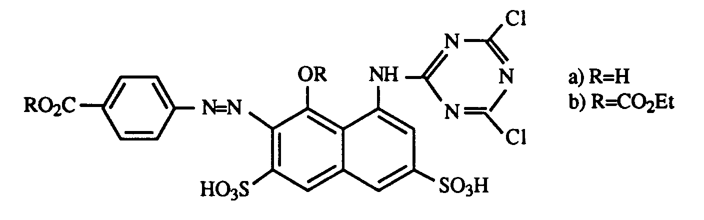

### Example 22

A solution of the dye (a) (2.0 g; 2.6 mmol) in DMF (25 ml) was cooled to -5° C (methanol/ice bath). To this solution were added in this order triethylamine (2.0 ml; 10.7 mmol) and ethyl chloroformate (0.5 ml; 5.3 mmol) and the mixture was kept stirring for 15 minutes. The solid triethylamine hydrochloride was filtered off and ice was added to the filtrate. After stirring the dye (b) separated out as a blue solid which was filtered and dried at a temperature lower than 30°C.

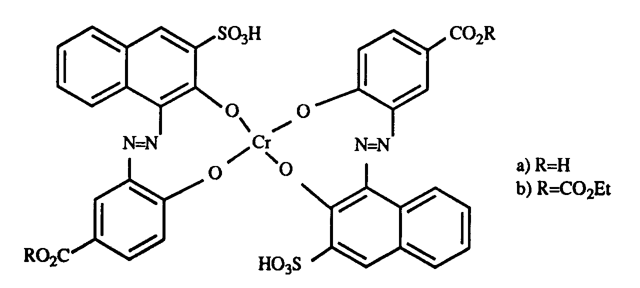

### Example 23

A solution of the dye (a) (0.1 g; 0.21 mmol) in DMF (10 ml) was cooled to -5° C (methanol/ice bath). To this solution were added in this order triethylamine (0.27 ml; 1.41mmol) and ethyl chloroformate (0.19 ml; 1.4 mmol) and the mixture was kept stirring for 10 minutes. The solid triethylamine hydrochloride was filtered off and ice was added to the filtrate. After stirring the dye (b) separated out as a blue solid which was filtered and dried at a temperature lower than 30°C.

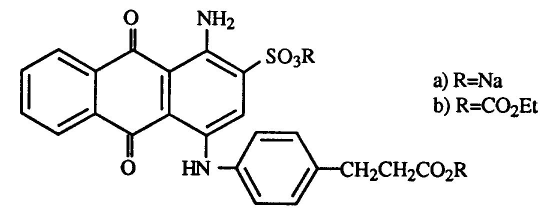

### Example 24

A solution of the dye (a) (0.1 g; 0.4 mmol) in DMF (10 ml) was cooled to -5° C (methanol/ice bath). To this solution were added in this order triethylamine (0.16 ml; 1.2mmol) and ethyl chloroformate (0.11 ml; 1.2 mmol) and the mixture was kept stirring for 10 minutes. The solid triethylamine hydrochloride was filtered off and ice was added to the filtrate. After stirring the dye (b) separated out as a red solid which was filtered and dried at a temperature lower than 30°C.

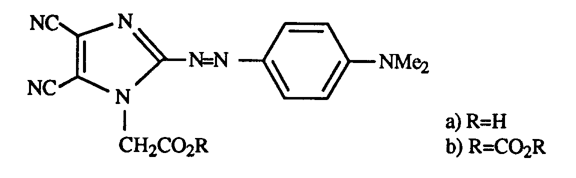

### Example 25

A solution of the dye (a) (0.4 g; 1.48 mmol) in DMF (10 ml) was cooled to -5° C (methanol/ice bath). To this solution were added in this order triethylamine (0.31 ml; 2.23 mmol) and 4-nitrobenzyl chloroformate (0.47 ml; 2.2 mmol) and the mixture was kept stirring for 30 minutes. The solid triethylamine hydrochloride was filtered off and ice was added to the filtrate. After stirring the dye (b) precipitated and it was filtered and dried at a temperature lower than 30°C.

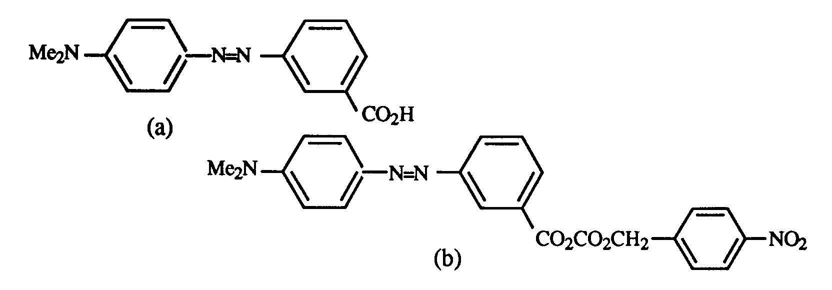

## Claims

1. Dyes which are characterised by the following group: 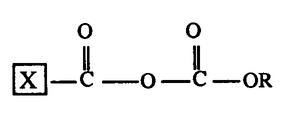 where X = D-Y-(CH₂)ₙ; D is the *AZO* chromophore, there may be a connecting group, represented by Y; R is an alkyl group C₁₋₆, and it may contain one or more halogen atoms.

2. Dyes according to claim 1 which are characterised by R being an aryl group of general formula: 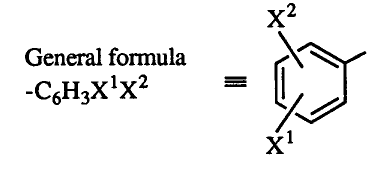 where X¹ and X² may be H, an alkyl group (C₁₋₆), F, Cl, Br, NO₂, OH and OCH₃ and may be located in position *o*, *m*, *p*, related to the chromophore.

3. Dyes according to the previous claims characterised by R being a benzyl group of general formula: 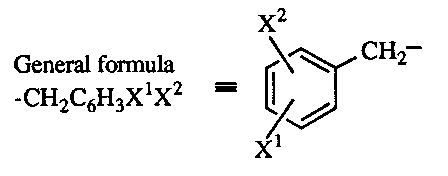 where X¹ and X² may be H, an alkyl group (C₁₋₆), F, Cl, Br, NO₂, OH and OCH₃ and may be located in position *o*, *m*, *p*, related to the chromophore.

4. Dyes according to the previous claims characterised by D being anthraquinone or phthalocyanine.

5. Dyes according to the previous claims characterised by containing one or more solubilizing groups, such as -SO₃H.

6. Dyes according to the previous claims, characterised by having the chromophore complexed to a metal that may be Cu, Cr, Co or Fe.

7. Dyes being characterised by being used for dyeing wool, polyamide, silk, polyester and proteic materials such as leather.
